(19) Europäisches Patentamt / European Patent Office / Office européen des brevets

(11) **EP 2 390 767 A1**

(12) **EUROPEAN PATENT APPLICATION**

(43) Date of publication:
**30.11.2011 Bulletin 2011/48**

(51) Int Cl.:
**G06F 3/041** (2006.01)

(21) Application number: **10164366.6**

(22) Date of filing: **28.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Research In Motion Limited
Waterloo, ON N2L 3W8 (CA)**

(72) Inventor: **Tong, Kuo-Feng
Waterloo Ontario N2L 3W8 (CA)**

(74) Representative: **Roberts, Gwilym Vaughan et al
Kilburn & Strode LLP
20 Red Lion Street
London WC1R 4PJ (GB)**

Remarks:
Amended claims in accordance with Rule 137(2) EPC.

(54) **Electronic device including touch-sensitive display and method of controlling same**

(57) A method includes detecting a first touch at a first location and a second touch at a second location on a touch-sensitive display, determining a first force value and a second force value based on measured force values at force sensors, force sensor locations, and the first and second locations, determining a third force value based on the measured force values at force sensors, the force sensor locations, and the first and second locations, and pairing coordinate values of the first touch and the second touch based on the first force value, the second force value, and the third force value.

FIG. 6

EP 2 390 767 A1

**Description**

**FIELD OF TECHNOLOGY**

The present disclosure relates to electronic devices including but not limited to portable electronic devices having touch-sensitive displays and their control.

**BACKGROUND**

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. Improvements in devices with touch-sensitive displays are desirable.

**SUMMARY**

A method includes detecting a first touch at a first location and a second touch at a second location on a touch-sensitive display, determining a first force value and a second force value based on measured force values at force sensors, force sensor locations, and the first and second locations, determining a third force value based on the measured force values at force sensors, the force sensor locations, and the first and second locations, and pairing coordinate values of the first touch and the second touch based on the first force value, the second force value, and the third force value. A portable electronic device includes a touch-sensitive display, a plurality of force sensors arranged and constructed to obtain measured force values on the touch-sensitive display. A processor is coupled to the force sensors and to the touch-sensitive display to detect a first touch at a first location and a second touch at a second location on the touch-sensitive display, determine a first force value and a second force value based on the measured force values, force sensor locations, and the first and second locations, determine a third force value based on the measured force values, the force sensor locations, and the first and second locations, and pair coordinate values of the first touch and the second touch based on the first force value, the second force value, and the third force value.

**BRIEF DESCRIPTION OF THE DRAWINGS**

FIG. 1 is a block diagram of a portable electronic device in accordance with the present disclosure.
FIG. 2 is a front view of an example of a portable electronic device in accordance with the present disclosure.
FIG. 3 is a sectional view through line 202 of FIG. 2 in accordance with the present disclosure.
FIG. 4 is a functional block diagram showing components of the portable electronic device in accordance with the present disclosure.
FIG. 5 is a flowchart illustrating a method of controlling a portable electronic device in accordance with the present disclosure.
FIG. 6 illustrates touch locations on a touch-sensitive display in accordance with the present disclosure.

**DETAILED DESCRIPTION**

The following describes an electronic device and method of controlling the electronic device. The method includes detecting a first touch and a second touch on a touch-sensitive display, determining a first force value and a second force value, for example, based on a force balance and based on a torque balance in a first coordinate axis, determining a third force value based on a torque balance in a second coordinate axis, and pairing coordinate values of the first touch and the second touch based on the first force value, the second force value, and the third force value.

For simplicity and clarity of illustration, reference numerals may be repeated among the figures to indicate corresponding or analogous elements. Numerous specific details are set forth to provide a thorough understanding of the embodiments described herein. The embodiments may be practiced without these specific details. In other instances, well-known methods, procedures, and components have not been described in detail so as not to obscure the embodiments described herein. The description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

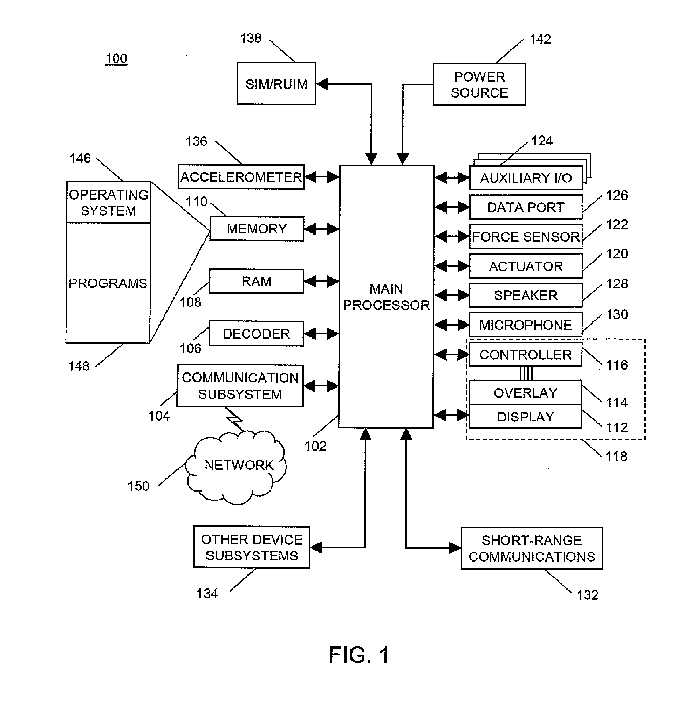

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications. A power source 142, such as one or more rechargeable batteries or a port to another power supply, powers the portable electronic device 100.

The processor 102 interacts with other devices, such as a Random Access Memory (RAM) 108, memory 110, a display 112 with a touch-sensitive overlay 114 operably coupled to an electronic controller 116 that together comprise a touch-sensitive display 118, one or more actuators 120, a plurality of force sensors 122, an auxiliary input/output (I/O) subsystem 124, a data port 126, a speaker 128, a microphone 130, short-range communications 132 and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into the memory 110.

The portable electronic device 100 also includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, or surface acoustic wave (SAW) touch-sensitive display, as known in the art. A capacitive touch-sensitive display includes the display 112 and a capacitive touch-sensitive overlay 114. The overlay 114 may be an assembly of multiple layers in a stack including, for example, a substrate, LCD display 112, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118 and processed by the controller 116, for example, to determine a location of a touch. Touch location data may include a single point of contact, such as a point at or near a center of the area of contact, or the entire area of contact for further processing. The location of a touch detected on the touch-sensitive display 118 may include x and y components, e.g., horizontal and vertical with respect to one's view of the touch-sensitive display 118, respectively. For example, the x component may be determined by a signal generated from one touch sensor layer, and the y component may be determined by a signal generated from another touch sensor layer. A signal is provided to the controller 116 in response to detection of a suitable object, such as a finger, thumb, or other items, for example, a stylus, pen, or other pointer, depending on the nature of the touch-sensitive display 118. More than one simultaneous location of contact may occur and be detected.

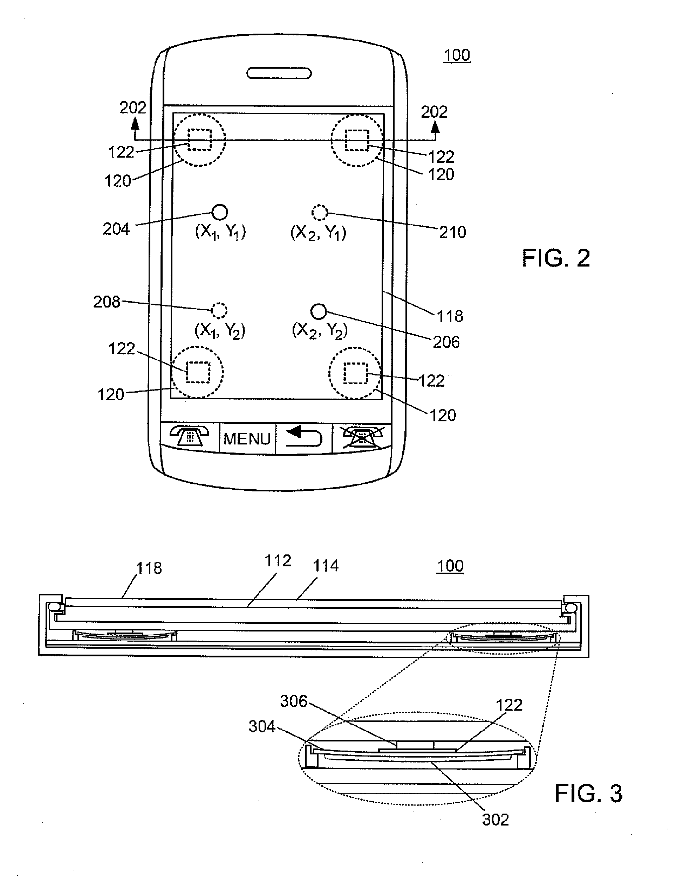

The actuator 120 may comprise one or more piezoelectric (piezo) actuators that provide tactile feedback. A front view of an example of a portable electronic device 100 is shown in FIG. 2. The actuator 120 comprises four piezo actuators 120, each located near a respective corner of the touch-sensitive display 118. FIG. 3 is a sectional side view of the portable electronic device 100 through the line 202 of FIG 2. Each piezo actuator 120 is supported within the portable electronic device 100 such that contraction of the piezo actuators 120 imparts a force on the touch-sensitive display 118, opposing a force externally imparted on the display 118. Each piezo actuator 120 includes a piezo device 302, such as a piezoelectric disk, adhered to a substrate 304, such as a metal substrate. An element 306 that is advantageously at least partially flexible and comprises, for example, hard rubber may be located between the piezo device 302 and the touch-sensitive display 118. The element 306 does not substantially dampen the force imparted on the touch-sensitive display 118. In the example of FIG. 2, four force sensors 122 are utilized, with each force sensor 122 located between an element 306 and the substrate 304. The substrate 304 bends when the piezo device 302 contracts diametrically due to build up of charge at the piezo device 302 or in response to an external force imparted on the touch-sensitive display 118. The charge/voltage may be modified by varying the applied voltage or current, thereby controlling the force imparted by the piezo actuators 120 on the touch-sensitive display 118. The charge/voltage on the piezo actuators 120 may be removed by a controlled discharge voltage/current that causes the piezo device 302 to expand diametrically, decreasing the force imparted by the piezo actuators 120 on the touch-sensitive display 118. Absent an external force imparted on the touch-sensitive display 118 and absent a charge on the piezo device 302, the piezo actuator 120 may be slightly bent due to a mechanical preload.

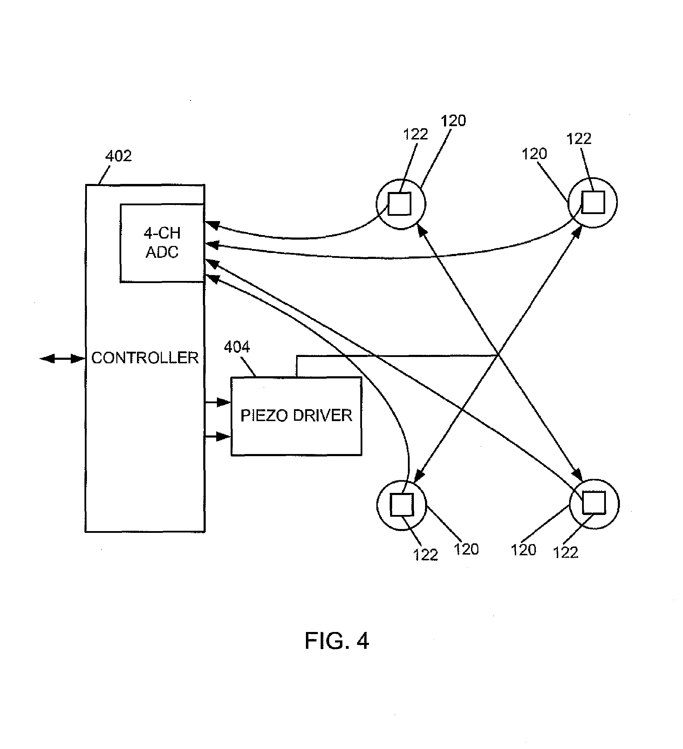

A functional block diagram of components of the portable electronic device 100 is shown in FIG. 4. In this example, each force sensor 122 is coupled to a controller 402, which includes an amplifier and analog-to-digital converter (ADC). The force sensors 122 may be, for example, force-sensing resistors in an electrical circuit, wherein the resistance changes with force imparted on the force sensors 122. As force imparted on the touch-sensitive display 118 increases, the resistance decreases. This change is determined via the controller 402 for each of the force sensors 122. Each force sensor 122 is calibrated to determine a force value, referred to herein as the measured force value. The measured force values by the four force sensors 122 may differ depending on the location of the force imparted on the touch-sensitive display 118. For example, a force imparted by a touch at an off-center location on the touch-sensitive display 118 results in a higher measured force value at the force sensor 122 nearest the touch location than the measured force values at the force sensors 122 that are farther away from the touch location.

The piezo actuators 120 are coupled to a piezo driver 404 that communicates with the controller 402. The controller 402 is also in communication with the main processor 102 of the portable electronic device 100 and may receive and provide signals to the main processor 102. The piezo driver 404 may optionally be embodied in drive circuitry between the controller 402 and the actuators 120. The controller 402 controls the piezo driver 404 that controls the voltage/current to the piezo devices 302 and thus controls the charge/voltage and the force imparted by the piezo actuators 120 on the touch-sensitive display 118. Each of the piezo devices 302 may be controlled substantially equally and concurrently. Optionally, the piezo devices 302 may be controlled separately. Collapse and release of a dome switch may be simulated. Other switches, actuators, keys, and so forth may be simulated, or a non-simulated tactile feedback may be provided.

When two touches begin simultaneously or near simultaneously or when two touches move relative to the touch-sensitive display 118 while touch contact is maintained with the touch-sensitive display 118, the x and y coordinate values for each touch are received. The x and y coordinate values may, however, be mismatched such that the x coordinate value for one touch is incorrectly paired with the y coordinate value of the other touch and the x coordinate value of the other touch is incorrectly paired with the with the y coordinate value of the one touch. This incorrect pairing is also known as ghost touches. An example of two touches 204, 206 and corresponding ghost touches 208, 210 is shown in FIG. 2. The coordinates, $X_1$, $Y_1$, of the touch 204 and the coordinates, $X_2$, $Y_2$, of the touch 206 may be incorrectly paired by the portable electronic device 100 to provide the coordinate pair $X_1$, $Y_2$ of the ghost touch 208 and the coordinate pair $X_2$, $Y_1$ of the ghost touch 210.

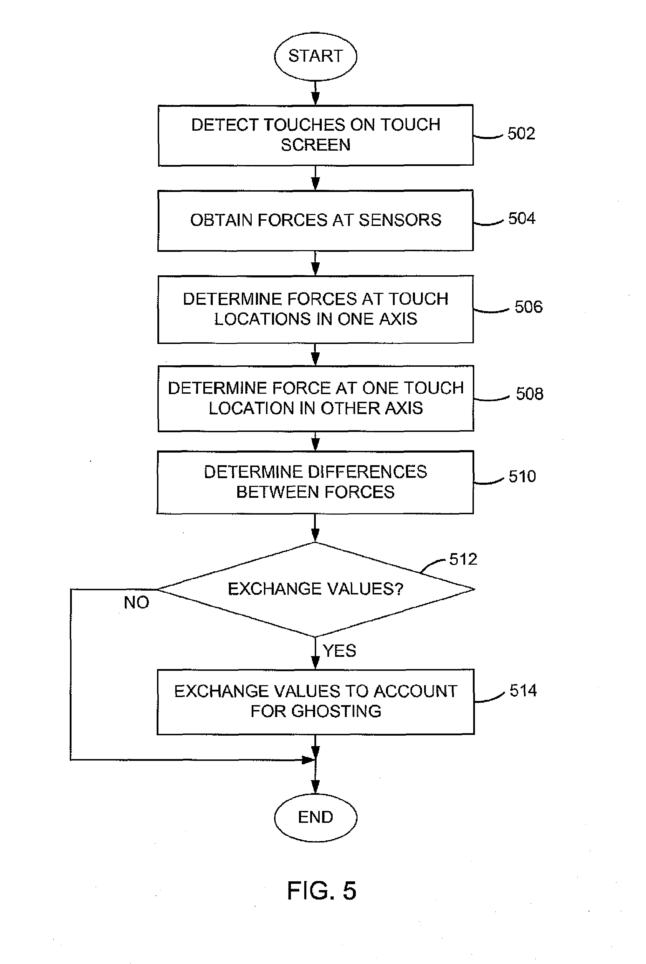

A flowchart illustrating a method of controlling a portable electronic device is shown in FIG. 5. The method may be carried out by computer-readable code executed, for example, by the processor 102. Computer-readable code executable by at least one processor of the portable electronic device to perform the method may be stored in a computer-readable medium. Coding of software for carrying out such a method is within the scope of a person of ordinary skill in the art given the present description. The method may contain additional or fewer processes than shown and/or described, and may be performed in a different order.

Two touches on the touch-sensitive display 118 are detected 502 and coordinate values of locations of the touches are determined. Measured force values are obtained 504. The processor 102 detects two touch locations based on coordinate values received from the controller 116. The detected touch locations may be incorrect, however, as the x and y coordinate values may be mismatched. The force values at the detected locations are determined 506 utilizing a force balance equation, referred to as "force balance," and a torque balance equation, referred to as "torque balance," along one of two coordinate axes. Another force value at the one of the two locations is determined 508 utilizing a force balance and a torque balance along the other of the two coordinate axes. The difference between the two force values at the one of the two locations is determined 510 and the difference between the force value at the one of the two locations determined at 508 and the force value at the other of the two locations determined at 506, is determined 510. Based on a comparison of the differences at 512, coordinate value pairings are determined by determining whether or not to exchange, for example, x-coordinate values for the detected locations. When, for example, the difference between the two force values at the one of the two locations is greater than the difference between the force value at the one of the two locations and the force value at the other of the two locations, the x-coordinate values for the two locations are exchanged 514. When the difference between the two force values at the one of the two locations is less than the difference between the force value at the other of the two locations and the force value at the other of the two locations, the x-coordinate values are not exchanged. Alternatively, the y-coordinate values may be exchanged.

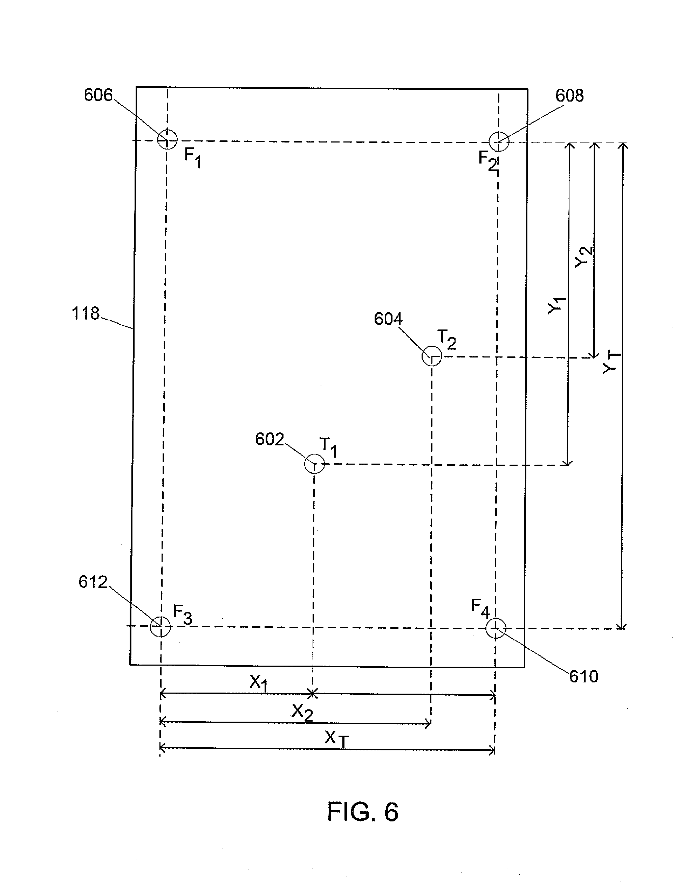

An example of the method of controlling a portable electronic device in accordance with the present embodiment is described with reference to FIG. 6, which illustrates touch locations on a touch-sensitive display 118. In the on or awake state of the portable electronic device 100, selectable features are displayed on the touch-sensitive display 118. Such selectable features may include, for example, icons for selection of an application for execution by the processor 102, buttons for selection of options, keys of a virtual keyboard, keypad or any other suitable features. Two touches, referred to as first and second touches, are detected on the touch-sensitive display 118. In the example of FIG. 6, first and second touches are detected at a first location 602 and a second location 604 on the touch-sensitive display 118.

When the touches are accompanied by a measurable force or forces imparted on the touch-sensitive display 118, four measured force values are obtained from signals from each of the force sensors 122 in this example. The force value of each touch is determined at the processor 102 based on the force values determined at each of the force sensors 122 and based on the touch locations for the first and second touches. The force value of each touch is determined from a force balance based on the measured force values and a torque balance utilizing the measured force values by the force sensors 122 and distances, along at least one coordinate axis, of each of the first and second touches from the force sensors 122. In the example illustrated in FIG. 6, a $F_{T1}$ is a force value related to force imparted by the first touch and a $F_{T2}$ is a force value related to force imparted by the second touch. The four force values $F_1$, $F_2$, $F_3$, $F_4$, referred to herein as measured force values, are measured at the four locations of the force sensors 122. Because $F_1$, $F_2$, $F_3$, $F_4$ are measured force values, these force values are related to the first and second forces imparted on the touch-sensitive display 118, and thus the first and second force values, e.g., by a force balance and by a torque balance.

When the difference between the x coordinate values is greater than the difference between the y coordinate values of the two touches, the force value of the second touch $F_{T2}$ is determined utilizing a torque balance along the x-coordinate axis combined with a force balance:

$$F_{T2} = ((F_2 + F_4) \times (X_T - X_1) - (F_1 + F_3) \times X_1) / (X_2 - X_1)$$

where:

$X_1$ is an x-coordinate distance from the first location 602 to the location associated with the measured force value $F_1$;
$X_2$ is an x-coordinate distance from the second location 604 to the location associated with the measured force value $F_1$; and
$X_T$ is the total x-coordinate distance between the measured force value $F_1$ and the measured force value $F_2$.

The force value of the first touch is determined based on $F_{T2}$ and the force balance:

$$F_{T1} = F_1 + F_2 + F_3 + F_4 - F_{T2}$$

When the difference in y-coordinate values for the two touches is greater than a threshold value, the force value $F_{T2}$ is also calculated utilizing a torque balance along the y-coordinate axis combined with a force balance:

$$F_{T2} = ((F_3 + F_4) \times (Y_T - Y_1) - (F_1 + F_2) \times Y_1) / (Y_2 - Y_1)$$

where:

Y$_1$ is a Y coordinate distance from the first location 602 to the location associated with the measured force value F$_1$;
Y$_2$ is a Y coordinate distance from the second location 604 to the location associated with the measured force value F$_1$; and
Y$_T$ is the total Y coordinate distance between the measured force value F$_1$ and the measured force value F$_3$.

The threshold value is utilized to determine when a significant difference between the y coordinate values of the touches occurs. When the difference between the y coordinate values is zero or is very small, mismatched coordinate pairs have little or no effect and need not be exchanged.

The difference between the force value F$_{T2}$ determined utilizing the torque balance along the y coordinate axis and the force value F$_{T2}$ determined utilizing the torque balance along the x coordinate axis, is determined. The difference between the force value F$_{T2}$ determined utilizing the torque balance along the y-coordinate axis and the force value F$_{T1}$ determined utilizing the torque balance along the x coordinate axis, is determined. When the difference between the two values of F$_{T2}$ is greater than the difference between the force value F$_{T2}$ determined utilizing the torque balance along the y-coordinate axis and the force value F$_{T1}$ determined utilizing the torque balance along the x-coordinate axis, by a threshold value, the x coordinate value determined for the first touch is exchanged with the x coordinate value determined for the second touch. The value determined for F$_{T1}$ is exchanged with the value determined for F$_{T2}$. The threshold value is utilized to determine when the difference between the two values of F$_{T2}$ is significantly greater than the difference between the force value F$_{T2}$ determined utilizing the torque balance along the y-coordinate axis and the force value F$_{T1}$ determined utilizing the torque balance along the x-coordinate axis to reduce the chance of exchanging x coordinate values as a result of differences caused by inaccuracies, referred to as noise.

When the value of the x coordinate values are exchanged, the force value of the second touch, as initially determined utilizing a torque balance along the x coordinate, is also exchanged with the force value of the first touch such that F$_{T2}$ and F$_{T1}$ are exchanged. After the x coordinates are exchanged, exchanging F$_{T2}$ and F$_{T1}$ has the same effect as determining the force value of the first touch utilizing a torque balance along the x-coordinate axis combined with a force balance:

$$F_{T1} = ((F_2 + F_4) \times (X_T - X_2) - (F_1 + F_3) \times X_2) / (X_1 - X_2)$$

When the difference between the x coordinate values is not greater than the difference between the y coordinate values of the two touches, the force value of the second touch F$_{T2}$ is determined utilizing a torque balance along the y-coordinate axis combined with a force balance:

$$F_{T2} = ((F_3 + F_4) \times (Y_T - Y_1) - (F_1 + F_2) \times Y_1) / (Y_2 - Y_1)$$

where:

Y$_1$ is the Y coordinate distance from the first location 602 to the location associated with the measured force value F$_1$;
Y$_2$ is the Y coordinate distance from the second location 604 to the location associated with the measured force value F$_1$; and
Y$_T$ is the total Y coordinate distance between the measured force value F$_1$ and the measured force value F$_3$.

The force value of the first touch is determined based on F$_{T2}$ and the force balance:

$$F_{T1} = F_1 + F_2 + F_3 + F_4 - F_{T2}$$

When the difference in x coordinate values for the two touches is greater than a threshold value, the force value F$_{T2}$ is also calculated utilizing a torque balance along the x-coordinate axis combined with a force balance:

$$F_{T2} = ((F_2 + F_4) \times (X_T - X_1) - (F_1 + F_3) \times X_1) / (X_2 - X_1)$$

where:

$X_1$ is the x-coordinate distance from the first location 602 to the location associated with the measured force value $F_1$;

$X_2$ is the X coordinate distance from the second location 604 to the location associated with the measured force value $F_1$; and

$X_T$ is the total X coordinate distance between the measured force value $F_1$ and the measured force value $F_2$.

The threshold value is utilized to determine when there is a significant difference between the x coordinate values of the touches. When the difference between the x coordinate values is zero or is very small, mismatched coordinate pairs have little or no effect and are not exchanged.

The difference between the force value $F_{T2}$ determined utilizing the torque balance along the x-coordinate axis and the force value $F_{T2}$ determined utilizing the torque balance along the y-coordinate axis is determined. The difference between the force value $F_{T2}$ determined utilizing the torque balance along the x coordinate axis and the force value $F_{T1}$ determined utilizing the torque balance along the y coordinate axis, is determined. When the difference between the two value values of $F_{T2}$ is greater than the difference between the force value $F_{T2}$ determined utilizing the torque balance along the x-coordinate axis and the force value $F_{T1}$ determined utilizing the torque balance along the y-coordinate axis, by a threshold value, the x coordinate value determined for the first touch is exchanged with the x coordinate value determined for the second touch. The threshold value is utilized to determine when the difference between the two value values of $F_{T2}$ is significantly greater than the difference between the force value $F_{T2}$ determined utilizing the torque balance along the x-coordinate axis and the force value $F_{T1}$ determined utilizing the torque balance along the y-coordinate axis to reduce the chance of exchanging x coordinate values as a result of differences caused by noise.

The measured force values $F_1$, $F_2$, $F_3$, $F_4$ are utilized to determine the force values related to the forces imparted by the touches on the touch-sensitive display 118. In another example, the measured force values may be adjusted based on the orientation of the portable electronic device 20. The orientation is determined based on signals from the accelerometer 136 and the measured force values $F_1$, $F_2$, $F_3$, $F_4$ may be adjusted to compensate for the mass of the touch-sensitive display 118 and the force of gravity.

The electronic device includes force sensors and a touch-sensitive display. Touches on the touch-sensitive display are detected and the location of each of the touches on the touch-sensitive display is determined. Incorrect pairings of x and y coordinate values from multiple touches may be determined utilizing data from the force sensors and the touch-sensitive display. An input at the portable electronic device may be determined based on the location of touches and force values.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

**Claims**

1. A method comprising:

detecting a first touch at a first location and a second touch at a second location on a touch-sensitive display;

determining a first force value and a second force value based on measured force values at force sensors, force sensor locations, and the first and second locations;

determining a third force value based on the measured force values at the force sensors, the force sensor locations, and the first and second locations;

pairing coordinate values of the first touch and the second touch based on the first force value, the second force value, and the third force value.

2. The method according to claim 1, wherein the first force value and the second force value are determined based on distances, along a first coordinate axis, between the first location and the force sensor locations and between the second location and the force sensor locations, and wherein the third force value is determined based on distances, along a second coordinate axis, between the first location and the force sensor locations and between the second location and the force sensor locations.

3. The method according to claim 1, wherein the first force value and the second force value are determined based on a torque balance in the first coordinate axis, and the third force value is determined based on a torque balance in the second coordinate axis.

4. The method according to claim 1, wherein the first force value is related to the first touch and the second force value and third force value are related to the second touch.

5. The method according to claim 1, comprising determining a difference between the second force value the third force value.

6. The method according to claim 1, comprising determining a difference between the first force value and the third force value.

7. The method according to claim 1, wherein pairing coordinate values of the first touch and the second touch comprises pairing based on a difference between the second force value and the third force value and a difference between first force value and the third force value.

8. The method according to claim 1, wherein pairing comprises switching coordinate pairings when the difference between the second force value and the third force value is greater than the difference between first force value and the third force value.

9. The method according to claim 1, comprising selecting the first coordinate axis based on at least one of a difference between x coordinate values of the first touch and the second touch and a difference between y coordinate values of the first touch and the second touch.

10. The method according to claim 1, comprising associating force values determined for the first touch and the second touch with respective pairs of coordinate values.

11. The method according to claim 1, comprising determining an orientation of the electronic device and compensating for orientation of the electronic device based on gravity and a mass of the touch-sensitive display.

12. The method according to claim 1, comprising receiving the measured force values from four sensors, each located near a respective corner of the touch-sensitive display.

13. A computer-readable medium having computer-readable code executable by at least one processor of the portable electronic device to perform the method of claim 1.

14. An electronic device comprising:

a touch-sensitive display;
a plurality of force sensors arranged and constructed to obtain measured force values on the touch-sensitive display;
a processor coupled to the force sensors and to the touch-sensitive display to carry out the method according to any one of claims 1 to 12.

**Amended claims in accordance with Rule 137(2) EPC.**

1. A method comprising:

detecting a first touch and a second touch on a touch-sensitive display (118) and determining a first touch location and a second touch location based on coordinate values of the first touch and the second touch;
measuring force values on the touch-sensitive display (118) at force sensors (122);
determining a first force value related the second touch and a second force value related to the first touch based on the measured force values, force sensor locations, and the first and second locations along a first coordinate axis;

determining a third force value related to the second touch based on the measured force values, the force sensor locations, and the first and second locations along a second coordinate axis;

verifying pairing of the coordinate values of the first touch and the second touch based on the first force value, the second force value, and the third force value.

**2.** The method according to claim 1, wherein the first force value and the second force value are determined based on distances, along a first coordinate axis, between the first location and the force sensor locations and between the second location and the force sensor locations, and wherein the third force value is determined based on distances, along a second coordinate axis, between the first location and the force sensor locations and between the second location and the force sensor locations.

**3.** The method according to claim 1, wherein the first force value and the second force value are determined based on a torque balance equation in the first coordinate axis, and the third force value is determined based on a torque balance equation in the second coordinate axis.

**4.** The method according to claim 1, comprising determining a difference between the second force value the third force value.

**5.** The method according to claim 1, comprising determining a difference between the first force value and the third force value.

**6.** The method according to claim 1, wherein verifying coordinate values of the first touch and the second touch comprises verifying based on a difference between the second force value and the third force value and a difference between first force value and the third force value.

**7.** The method according to claim 1, wherein verifying comprises switching coordinate pairings when the difference between the second force value and the third force value is greater than the difference between first force value and the third force value.

**8.** The method according to claim 1, comprising selecting the first coordinate axis based on at least one of a difference between x coordinate values of the first location and the second location and a difference between y coordinate values of the first location and the second location.

**9.** The method according to claim 1, comprising associating force values determined for the first touch and the second touch with respective pairs of coordinate values.

**10.** The method according to claim 1, comprising determining an orientation of the electronic device (100) and compensating for orientation of the electronic device (100) based on gravity and a mass of the touch-sensitive display (118).

**11.** The method according to claim 1, comprising receiving the measured force values from four sensors (122), each located near a respective corner of the touch-sensitive display (118).

**12.** A computer-readable medium having computer-readable code executable by at least one processor (102) of a portable electronic device (100) to perform the method of any of claims 1 to 11.

**13.** An electronic device (100) comprising:

a touch-sensitive display (118);
a plurality of force sensors (122) arranged and constructed to obtain measured force values on the touch-sensitive display (118);
a processor (102) coupled to the force sensors (122) and to the touch-sensitive display (118) to carry out the method according to any one of claims 1 to 11.

FIG. 1

FIG. 2

100

202

122
120

204
(X₁, Y₁)

208
(X₁, Y₂)

122
120

202

122
120

210
(X₂, Y₁)

118

(X₂, Y₂)
206

122
120

MENU

118    112    114    100

FIG. 3

306
304
122
302

FIG. 4

START

DETECT TOUCHES ON TOUCH SCREEN ⟍ 502

OBTAIN FORCES AT SENSORS ⟍ 504

DETERMINE FORCES AT TOUCH LOCATIONS IN ONE AXIS ⟍ 506

DETERMINE FORCE AT ONE TOUCH LOCATION IN OTHER AXIS ⟍ 508

DETERMINE DIFFERENCES BETWEEN FORCES ⟍ 510

EXCHANGE VALUES? ⟍ 512

NO

YES

EXCHANGE VALUES TO ACCOUNT FOR GHOSTING ⟍ 514

END

FIG. 5

FIG. 6

Europäisches
Patentamt

European
Patent Office

Office européen
des brevets

## EUROPEAN SEARCH REPORT

**Application Number**

EP 10 16 4366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2009/054561 A1 (KOREA RES INST OF STANDARDS [KR]; KIM JONG-HO [KR]; KWON HYUN-JOON [KR] 30 April 2009 (2009-04-30) <br> * figures 1,2,14,15,16 * <br> * page 5, line 1 - page 6, line 9 * <br> * page 7, line 21 - page 8 * <br> * page 11, line 13 - page 15 * <br> * page 17, line 22 - page 20, line 9 * <br> ----- | 1-14 | INV. <br> G06F3/041 |
| A | US 2010/053116 A1 (DAVERMAN DODGE [US] ET AL) 4 March 2010 (2010-03-04) <br> * figures 1,2,3,4,5 * <br> * paragraph [0011] * <br> * paragraphs [0015] - [0028] * <br> ----- | 1-14 | |
| A | US 2010/013777 A1 (BAUDISCH PATRICK M [US] ET AL) 21 January 2010 (2010-01-21) <br> * figures 3a-3c,4a,4b,5 * <br> * paragraph [0004] * <br> * paragraphs [0028] - [0029] * <br> * paragraphs [0042] - [0047] * <br> * paragraphs [0055] - [0061] * <br> * paragraphs [0072] - [0082] * <br> ----- | 1-14 | |
| A | US 2009/243817 A1 (SON JAE [US]) 1 October 2009 (2009-10-01) <br> * paragraphs [0059], [0062] * <br> ----- | 1,11 | TECHNICAL FIELDS SEARCHED (IPC) <br><br> G06F |

The present search report has been drawn up for all claims

| Place of search | Date of completion of the search | Examiner |
|---|---|---|
| The Hague | 12 November 2010 | Piriou, Nominoë |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 16 4366

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2010

| Patent document cited in search report | | Publication date | Patent family member(s) | | Publication date |
|---|---|---|---|---|---|
| WO 2009054561 | A1 | 30-04-2009 | KR 20090041786 A<br>US 2010265208 A1 | | 29-04-2009<br>21-10-2010 |
| US 2010053116 | A1 | 04-03-2010 | WO 2010027591 A2 | | 11-03-2010 |
| US 2010013777 | A1 | 21-01-2010 | NONE | | |
| US 2009243817 | A1 | 01-10-2009 | WO 2009146006 A1 | | 03-12-2009 |

For more details about this annex : see Official Journal of the European Patent Office, No. 12/82